# EUROPÄISCHE PATENTSCHRIFT

(11) **EP 2 180 976 B1**
(45) Veröffentlichungstag und Bekanntmachung des Hinweises auf die Patenterteilung: **15.06.2011**
(21) Anmeldenummer: 08784829.7
(22) Anmeldetag: 17.07.2008
(51) Int. Cl.: B23Q 5/40, B23Q 11/12, F16H 25/20, F16H 57/04

(54) **SPINDELMOTOR**
SPINDELMOTOR
MOTEUR DE BROCHE

(30) Priorität: 16.08.2007 DE 102007038853
(43) Veröffentlichungstag der Anmeldung: 05.05.2010
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2008/005846
(87) Internationale Veröffentlichungsnummer: WO 2009/021593

(56) Entgegenhaltungen:
- EP-A- 0 569 775
- EP-A- 0 811 461
- WO-A-02/093716
- DE-A1- 3 413 184
- DE-A1- 4 202 510
- DE-A1- 10 235 078
- GB-A- 699 778
- US-A- 4 232 562
- US-A- 5 381 702
- US-A1- 2007 062 317

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

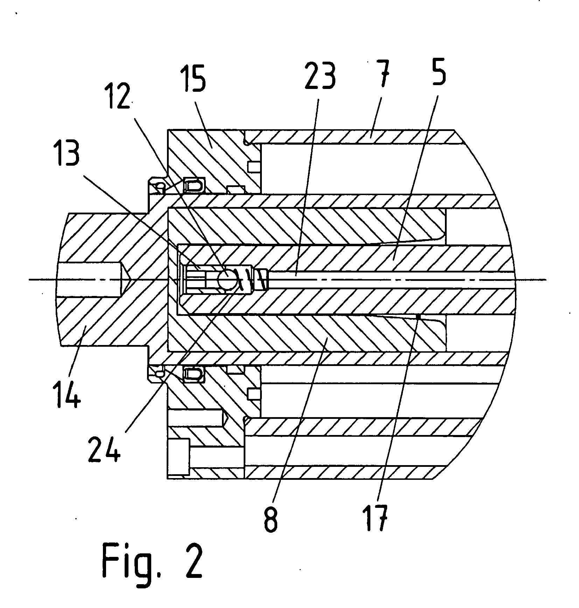

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus dem Katalog der Firma Dichtomatik sind Hochdruckdichtungen aus dem Fachgebiet der Hydraulik bekannt, wie beispielsweise eine PTFE-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Elastomervorspannscheibe darstellt, die zwischen zwei Metallkäfigen geklemmt sind.

Aus der EP 0 569 775 A1 ist ein Spindelmotor mit den Merkmalen des Oberbegriffs des Anspruchs 1 bekannt, dessen motorabgewandtes axiales Ende frei ist.

Aus der DE 34 13 184 A1 ist eine Spindel bekannt, die nur durch die Spindelmutter und ein am axialen Ende der Spindel angeordnetes Gleitlager abgestützt ist. Es sind also zwei Abstützbereiche in axialer Richtung vorgesehen.

Der Erfindung liegt daher die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass er einen Elektromotor mit einem Rotor umfasst, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist In einem Gehäusetell
wobei zur axialen Führung ein Führungsteil mit der Spindelmutter und der Kolbenstange verbunden ist,

in der Kolbenstange eine Abstützkomponente für die Gewindespindel vorgesehen ist.

Von Vorteil ist dabei, dass eine große Hublänge realisierbar ist, da eine Abstützkomponente des ansonsten freien Endes der Gewindespindel ausführbar ist. Somit ist die Gewindespindel gelagert über ein Lager, das in einem Gehäuseteil zwischen Motor und Spindelgehäusebereich angeordnet ist. Außerdem ist sie gelagert in der Spindelmutter. Bei großer axialer Länger der Gewindespindel ist diese zusätzlich von der Abstützkomponente abgestützt an ihrem anderen vom ersten Ende abgewandten axialen Ende, wobei das Lager am ersten Ende vorgesehen ist, also motorseitig. Das mittels der Abstützkomponente gelagerte axiale Ende der Gewindespindel ist also das vom Motor abgewandte Ende der Gewindespindel. Somit sind auch sehr hohe Drehzahlen in jeder Stellung der Kolbenstange ermöglicht.

Bei einer vorteilhaften Ausgestaltung ist die Abstützkomponente in die Kolbenstange eingepresst. Von Vorteil ist dabei, dass eine einfach herstellbare kraftschlüssige Verbindung ausreichende Haltekraft liefert für den sicheren Betrieb des Spindelmotors.

Die Abstützkomponente lagert das vom Motor abgewandle axiale Ende der Gewindespindel, die Kolbenstange wird solange bis zu einem kritischen Wert herausgefahren und bei Überschreiten des kritischen Wertes wird die Gewindespindel nur durch die Spindelmutter und ein Lager gelagert. Von Vorteil ist dabei, dass bei sehr weitem Herausfahren noch geringere Reibungsverluste auftreten und trotzdem eine leistungsfähige Lagerung gewährleistet ist. Bei kleinen Ausfahrwegen ist die Abstützkomponente vorteilhaft, da die Gewindespindel sich in der Nähe des Lagers befindet und somit ein großer Teil der Gewindespindel auskragen würde und schon durch Eigengewicht eine Auslenkung bewirken und hohe Drehzahlen verhindern würde.

Bei einer vorteilhaften Ausgestaltung ist die Abstützkomponente aus PTFE und/oder Teflon ausgeführt. Von Vorteil ist dabei, dass nur geringe Reibungsverluste auftreten, da die Gewindespindel aus einem harten Material, wie Metall, Stahl oder dergleichen, fertigbar ist.

Bei einer vorteilhaften Ausgestaltung ist im Inneren des Spindelmotors, insbesondere im Spindelbereich abtriebsseitig vom Elektromotor, das Ölbad vorgesehen. Insbesondere ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Insbesondere ist in der Gewindespindel auch eine Ölpumpe integriert vorgesehen, die das Öl zur Hochdruckdichtung hin axial durch die Gewindespindel hindurch fördert. Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Bei einer vorteilhaften Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

Bei einer vorteilhaften Ausgestaltung ist die Dichtung als Wellendichtring ausgeführt, der in einem Gehäuseteil seinen Sitz hat, welches auch einen Sitz zur Aufnahme des Lagers der Gewindespindel aufweist,
wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einer vorteilhaften Ausgestaltung ist in der Kolbenstange eine Abstützkomponente verbunden, insbesondere eingepresst. Von Vorteil ist dabei, dass die Gewindespindel abstützbar ist und somit mit sehr großer axialer Länge ausführbar ist.

Bei einer vorteilhaften Ausgestaltung Ist die Abstützkomponente als im Wesentlichen zylindrische Ausnehmung ausgeführt, wobei an ihrem offenen Endbereich eine Einführschräge für die Einfädelung der Gewindespindel vorgesehen ist. Von Vorteil ist dabei dass geringe Reibung auftritt, Insbesondere bei Verwendung von PTFE-Material, insbesondere also Teflon, für die Abstützkomponente . Dabei ist die Gewindespindel aus Metall, insbesondere Stahl.

Bei einer vorteilhaften Ausgestaltung umfasst die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einer vorteilhaften Ausgestaltung umfasst die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einer vorteilhaften Ausgestaltung ist das Ventil zwischen einer Einlassöffnung und dem Schmierstoffkanal ist, insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einer vorteilhaften Ausgestaltung umfasst das Ventil zumindest eine von einer Feder gegen eine Öffnung gedrückte Kugel. Von Vorteil ist dabei, dass das Ventil mit einfachen und kostengünstigen Mitteln herstellbar ist.

Bei einer vorteilhaften Ausgestaltung mündet der Schmierstoffkanal zumindest mit seinem zweiten Ende derart im Bereich der Dichtung, dass Schmierstoff der Dichtung zugeführt wird. Von Vorteil ist dabei, dass Die Dichtung als Wellendichtring ausführbar ist und der mittels des Schmierstoffkanals herangeführte Schmierstoff die Dichtheit gewährleistet.

Bei einer vorteilhaften Ausgestaltung mündet der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einer vorteilhaften Ausgestaltung ist die Gewindespindel mit dem Rotor gelagert in einem Gehäuseteil des Elektromotors. Von Vorteil ist dabei, dass Lager einsparbar sind

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil. Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einer vorteilhaften Ausgestaltung wird eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Motorgehäuse
- 2: Rotorwelle
- 3: Stator
- 4: Gehäuseteil
- 5: Gewindespindel
- 6: Spindelmutter
- 7: Gehäuseteil
- 8: Abstützkomponente
- 9: Führungsring
- 10: Dichtring
- 11: Abstreifer
- 12: Kugel
- 13: Hülse
- 14: Kolbenstange
- 15: Gehäuseteil
- 16: Schulter zur Axialkraftaufnahme
- 17: Einführschräge
- 18: Lager
- 19: Dichtung, Wellendichtring
- 20: Klauenteil
- 21: Kunststoffstern
- 22: Klauenteil
- 23: Schmierstoffbohrung
- 24: Federelement
- 25: Führungsteil
- 26: Gewindering
- 30: Radialbohrung

Die Erfindung wird nun anhand von Abbildungen näher erläutert:

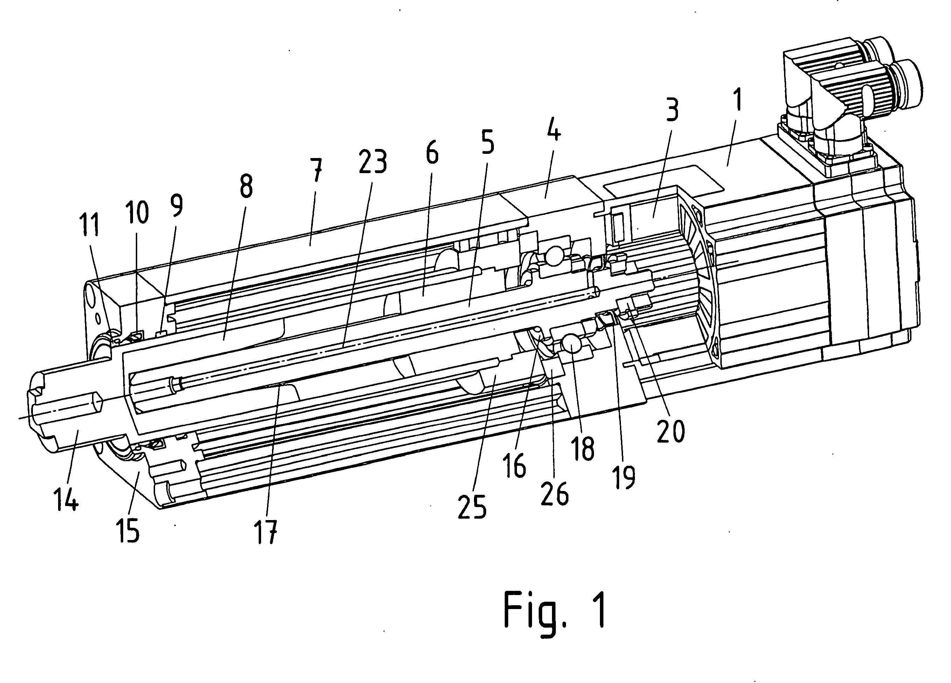

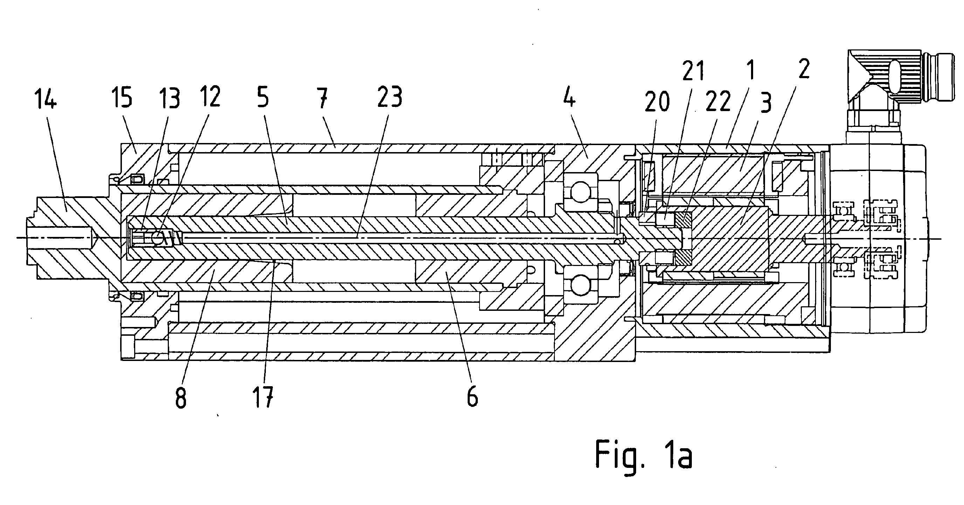

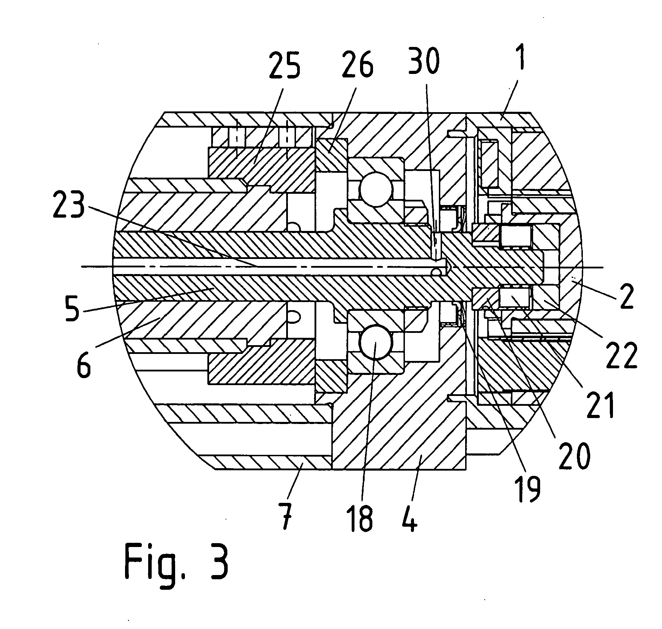

In der Figur 1 ist ein erfindungsgemäßer Spindelmotor in angeschnittener Schrägansicht und in Figur 1a in Schnittansicht gezeichnet. In Figur 2 und 3 sind jeweilige Ausschnitte hiervon vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugswiese ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist ein Klauenteil 20 und ein Klauenteil 22 auf, zwischen denen ein Kunststoffstern 21 angeordnet ist. Vorzugsweise ist diese Wellenkupplung spielfrei.

Eine im Gehäuseteil 4 angeordneter Dichtung 19 dichtet den Spindelinnenraum gegen den Motor hin ab.

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 5 axial bewegt, weil sie über Führungsteile, wie Führungsteil 25 und Gewindering 26, die mit Linearführvorrichtungen verbunden sind, linear geführt ist.

Zur Abstützkomponente bei besonders langer Ausführung der Gewindespindel 5 ist eine Abstützkomponente 8 aus Teflon vorgesehen, die eine zylindrische Bohrung aufweist zur Aufnahme der Gewindespindel 5 und an ihrem offenen Ende eine Aufweitung aufweist, die in den Figuren 1 und 2 als Einführschräge 17 erkennbar ist.

Die Abstützkomponente 8 ist pressverbunden in der Kolbenstange 14 und verliert den Kontakt zur Gewindespindel 5, wenn die Kolbenstange weit heraus gefahren wird. In diesem Fall ist jedoch auch die Spindelmutter weit verfahren und übernimmt die abstützende Funktion.

Beim Zurückfahren wird dann die Gewindespindel in die Einführschräge sozusagen eingefädelt.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil durch auftretenden lokalen Überdruck aktiviert. Hierzu wird die Kugel 12 von der Hülse 13 abgehoben und das Öl fließt durch die Hülse 13 an der Kugel 12 vorbei in die Schmierstoffbohrung 23 und wird bis zur Radialbohrung 30 befördert, wo es dann austritt im Bereich des Lagers 18 und der Dichtung 19.

Somit ist eine Schmierung in jeder Einbaulage gewährleistet.

Die geschilderte Ölpumpe ist wirksam, wenn die Kolbenstange nach unten also in Gravitationsrichtung weist. Wenn sie jedoch nach oben weist, fließt das Öl selbsttätig zum Lager 18 und der Dichtung 19.

Auch in dieser Montagerichtung des Spindelmotors ist wegen der zum Spindelinnraum hin offenen Ausführung des Gewindetriebs eine Schmierung des Gewindetriebs, des Führungsteils und der Nutensteine ausgeführt.

Die Kugel 12 wird bei Abbau des lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise eine WCP21 oder MA47.

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange (14) verbundenen Spindelmutter (6) im Eingriff steht,
wobei die Spindelmutter (6) mit Kolbenstange (14) axial geführt ist in einem Gehäuseteil (7) wobei zur axialen Führung ein Führungsteil (25) mit der Spindelmutter (6) und der Kolbenstange (14) verbunden ist,
**dadurch gekennzeichnet, dass**
in der Kolbenstange (14) eine mit der Kolbenstange (14) verbundene Abstützkomponente (8) für die Gewindespindel (5) derart vorgesehen ist, dass
(i) solange die Kolbenstange (14) bis zu einem kritischen Wert herausgefahren ist, die Spindelmutter (6), ein Lager (18) und die Abstützkomponente (8) die Gewindespindel (5) lagern, wobei die Abstützkomponente (8) hierbei das vom Motor abgewandte axiale Ende der Gewindespindel (5) lagert,
(ii) und dass bei Überschreiten des kritischen Wertes, also bei den kritischen Wert überschreltendem Herausfahren der Kolbenstange (14), die Gewindespindel (5) nur durch die Spindelmutter (6) und das Lager (18) gelagert ist.

2. Spindelmotor nach einem der vorangegangenen Ansprüche,
**dadurch gekennzeichnet, dass**
die Abstützkomponente (8) in die Kolbenstange (14) eingepresst ist.

3. Spindelmotor nach einem der vorangegangenen Ansprüche,
**dadurch gekennzeichnet, dass**
die Abstützkomponente (8) eine im Wesentlichen zylindrische Ausnehmung ausgeführt ist, wobei an ihrem offenen Endbereich eine Einführschräge (17) für die Einfädelung der Gewindespindel (5) vorgesehen ist.

4. Spindelmotor nach einem der vorangegangenen Ansprüche,
**dadurch gekennzeichnet, dass**
die Abstützkomponente (8) aus PTFE und/oder Teflon ausgeführt ist.

5. Spindelmotor nach einem der vorangegangenen Ansprüche,
**dadurch gekennzeichnet, dass**
im Inneren des Spindelmotors, insbesondere im Spindelbereich abtriebsseitig vom Elektromotor das Ölbad vorgesehen ist.

6. Spindelmotor nach einem der vorangegangenen Ansprüche,
**dadurch gekennzeichnet, dass**
zumindest eine Hochdruckdichtung zum Abdichten verwendet ist, insbesondere zwischen Spindelbereich und Elektromotor und/oder zwischen Spindelbereich und Umgebung.

7. Spindelmotor nach einem der vorangegangenen Ansprüche,
**dadurch gekennzeichnet, dass**
eine Dichtung zwischen dem Raumbereich des Elektromotors und dem Raumbereich, in welchem die Spindelmutter (6) angeordnet ist, vorgesehen ist.

8. Spindelmotor nach einem der vorangegangenen Ansprüche,
**dadurch gekennzeichnet, dass**
die Dichtung axial zwischen einem Lager (18) der Gewindespindel (5) und einer die Rotorwelle (2) und die Gewindespindel (5) verbindenden Kupplung angeordnet ist.

9. Spindelmotor nach einem der vorangegangenen Ansprüche,
**dadurch gekennzeichnet, dass**
die Kupplung eine axial steckbare Kupplung ist.

10. Spindelmotor nach einem der vorangegangenen Ansprüche,
**dadurch gekennzeichnet, dass**
die Dichtung als Wellendichtring ausgeführt ist, der in einem Gehäuseteil seinen Sitz hat, welches auch einen Sitz zur Aufnahme des Lagers (18) der Gewindespindel (5) aufweist,
wobei die Lauffläche des Wellendichtrings an der Gewindespindel (5) vorgesehen ist.

11. Spindelmotor nach einem der vorangegangenen Ansprüche,
**dadurch gekennzeichnet, dass**
die Gewindespindel (5) eine Schulter zur Aufnahme von Axialkräften aufweist.

12. Spindelmotor nach einem der vorangegangenen Ansprüche,
**dadurch gekennzeichnet, dass**
die Schulter am Innenring des für die Gewindespindel (5) vorgesehenen Lagers (18) abgestützt ist.

13. Spindelmotor nach einem der vorangegangenen Ansprüche,
**dadurch gekennzeichnet, dass**
die Kolbenstange (14) abtriebsseitig von einer schmierstoffbetriebenen Dichtungsanordnung abgedichtet ist zum abtriebsseitigen Gehäuseteil hin.

14. Spindelmotor nach einem der vorangegangenen Ansprüche,
**dadurch gekennzeichnet, dass**
die Dichtungsanordnung zumindest einen Abstreifer, einen O-Ring und/oder eine Nutdichtung umfasst.

15. Spindelmotor nach einem der vorangegangenen Ansprüche,
**dadurch gekennzeichnet, dass**
die Gewindespindel (5) zumindest einen Schmierstoffkanal umfasst, insbesondere einen aus mindestens einer Schmierstoffbohrung zusammengesetzten.

## Claims

1. A spindle motor,
comprising an electric motor with a rotor connected to a threaded spindle (5) whose thread engages a thread of a spindle nut (6) connected to a piston rod (14),
wherein the spindle nut (6) with piston rod (14) is axially guided in a housing part (7)
wherein for axial guiding, a guide part (25) is connected to the spindle nut (6) and to the piston rod (14),
**characterised in that**
a support component (8), connected to the piston rod (14), for the threaded spindle (5) is provided in the piston rod (14) in such a manner that
i. as long as the piston rod (14) is extended up to a critical value, the spindle nut (6), a bearing (18) and the support component (8) support the threaded spindle (5), wherein here the support component (8) supports the axial end, remote from the motor, of the threaded spindle (5),
ii. and that when the critical value is exceeded, therefore upon extension of the piston rod (14) in excess of the critical value, the threaded spindle (5) is only supported by the threaded nut (6) and the bearing (18).

2. A spindle motor according to any one of the preceding claims, **characterised in that** the support component (8) is forced into the piston rod (14).

3. A spindle motor according to any one of the preceding claims, **characterised in that** the support component (8) is in the form of a substantially cylindrical recess, wherein a feed slope (17) for the mounting of the threaded spindle (5) is provided at the open end region thereof.

4. A spindle motor according to any one of the preceding claims, **characterised in that** the support component (8) is made of PTFE and/or Teflon.

5. A spindle motor according to any one of the preceding claims, **characterised in that** the oil bath is provided within the spindle motor, in particular in the spindle region at the drive side of the electric motor.

6. A spindle motor according to any one of the preceding claims, **characterised in that** at least one high-pressure seal is used for sealing, in particular between the spindle region and the electric motor and/or between the spindle region and the surroundings.

7. A spindle motor according to any one of the preceding claims, **characterised in that** a seal is provided between the spatial region of the electric motor and the spatial region in which the spindle nut (6) is arranged.

8. A spindle motor according to any one of the preceding claims, **characterised in that** the seal is arranged axially between a bearing (18) of the threaded spindle (5) and a coupling connecting the rotor shaft (2) and the threaded spindle (5).

9. A spindle motor according to any one of the preceding claims, **characterised in that** the coupling is an axially insertable coupling.

10. A spindle motor according to any one of the preceding claims, **characterised in that** the seal is in the form of a shaft sealing ring having its seat in a housing part which also has a seat for receiving the bearing (18) of the threaded spindle (5), wherein the running surface of the shaft sealing ring is provided on the threaded spindle (5).

11. A spindle motor according to any one of the preceding claims, **characterised in that** the threaded spindle (5) has a shoulder for receiving axial forces.

12. A spindle motor according to any one of the preceding claims, **characterised in that** the shoulder is supported on the inner ring of the bearing (18) provided for the threaded spindle (5).

13. A spindle motor according to any one of the preceding claims, **characterised in that** at the drive side, the piston rod (14) is sealed towards the drive-side housing part by a lubricant-operated sealing arrangement.

14. A spindle motor according to any one of the preceding claims, **characterised in that** the sealing arrangement comprises at least one wiper ring, an O-ring and/or a groove seal.

15. A spindle motor according to any one of the preceding clams, **characterised in that** the threaded spindle (5) comprises at least one lubricant channel, in particular a lubricant channel composed of at least one lubricant bore.

## Revendications

1. Moteur de broche,
comprenant un moteur électrique avec un rotor qui est relié à une broche filetée (5) dont le filetage est en prise avec un filetage d'un écrou de broche (6) relié à une tige de piston (14),
l'écrou de broche (6) avec tige de piston (14) étant guidé axialement dans une partie de carter (7),
une pièce de guidage (25) étant reliée à l'écrou de broche (6) et la tige de piston (14) pour le guidage axial,
**caractérisé en ce que**
un composant de soutien (8) pour la broche filetée (5), relié à la tige de piston (14), est prévu dans la tige de piston (14) de telle manière que
(i) tant que la tige de piston (14) est sortie jusqu'à une valeur critique, l'écrou de broche (6), un palier (18) et le composant de soutien (8) supportent la broche filetée (5), le composant de soutien (8) supportant en l'occurrence l'extrémité axiale de la broche filetée (5) éloignée du moteur,
(ii) et qu'en cas de dépassement de la valeur critique, donc en cas de sortie de la tige de piston (14) au-delà de la valeur critique, la broche filetée (5) n'est plus supportée que par l'écrou de broche (6) et le palier (18).

2. Moteur de broche selon une des revendications précédentes,
**caractérisé en ce que**
le composant de soutien (8) est enfoncé dans la tige de piston (14).

3. Moteur de broche selon une des revendications précédentes,
**caractérisé en ce que**
le composant de soutien (8) est réalisé sous la forme d'un évidement essentiellement cylindrique, un chanfrein d'introduction (17) étant prévu dans sa zone d'extrémité ouverte pour l'insertion de la broche filetée (5).

4. Moteur de broche selon une des revendications précédentes,
**caractérisé en ce que**
le composant de soutien (8) est réalisé en PTFE et/ou en téflon.

5. Moteur de broche selon une des revendications précédentes,
**caractérisé en ce que**
le bain d'huile est prévu à l'intérieur du moteur de broche, en particulier dans la zone de la broche côté sortie du moteur électrique.

6. Moteur de broche selon une des revendications précédentes,
**caractérisé en ce que**
au moins un joint haute pression est utilisé pour l'étanchéité, en particulier entre zone de broche et moteur électrique et/ou entre zone de broche et environnement.

7. Moteur de broche selon une des revendications précédentes,
**caractérisé en ce que**
il est prévu un joint entre la zone d'espace du moteur électrique et la zone d'espace dans laquelle l'écrou de broche (6) est disposé.

8. Moteur de broche selon une des revendications précédentes,
**caractérisé en ce que**
le joint est disposé axialement entre un palier (18) de la broche filetée (5) et un accouplement reliant l'arbre de rotor (2) et la broche filetée (5).

9. Moteur de broche selon une des revendications précédentes,
**caractérisé en ce que**
l'accouplement est un accouplement par emmanchement axial.

10. Moteur de broche selon une des revendications précédentes,
**caractérisé en ce que**
le joint est réalisé sous la forme d'une garniture étanche d'arbre qui a son siège dans une partie de carter qui présente aussi un siège pour recevoir le palier (18) de la broche filetée (5),
la surface de glissement de la garniture étanche d'arbre étant prévue sur la broche filetée (5).

11. Moteur de broche selon une des revendications précédentes,
**caractérisé en ce que**
la broche filetée (5) présente un épaulement pour l'absorption des forces axiales.

12. Moteur de broche selon une des revendications précédentes,
**caractérisé en ce que**
l'épaulement est appuyé sur la bague intérieure du palier (18) prévu pour la broche filetée (5).

13. Moteur de broche selon une des revendications précédentes,
**caractérisé en ce que**
la tige de piston (14) est rendue étanche côté sortie par rapport à la partie de carter côté sortie par un dispositif d'étanchéité alimenté par lubrifiant.

14. Moteur de broche selon une des revendications précédentes,
**caractérisé en ce que**
le dispositif d'étanchéité comprend au moins un racleur, un joint torique et/ou une bague d'étanchéité.

15. Moteur de broche selon une des revendications précédentes,
**caractérisé en ce que**
la broche filetée (5) comprend au moins un canal de lubrification, en particulier un canal de lubrification composé d'au moins un alésage de lubrification.
